# EUROPÄISCHE PATENTSCHRIFT

(11) **EP 3 253 604 B1**
(45) Veröffentlichungstag und Bekanntmachung des Hinweises auf die Patenterteilung: **14.11.2018**
(21) Anmeldenummer: 16702944.6
(22) Anmeldetag: 04.02.2016
(51) Int. Cl.: B60J 7/19, B60J 7/02

(54) **ANORDNUNG MIT EINEM DECKEL FÜR EIN FAHRZEUGDACH**
ARRANGEMENT COMPRISING A COVER FOR A VEHICLE ROOF
SYSTÈME MUNI D'UN COUVERCLE, DESTINÉ AU TOIT D'UN VÉHICULE

(30) Priorität: 06.02.2015 DE 102015101747
(43) Veröffentlichungstag der Anmeldung: 13.12.2017
(73) Patentinhaber: Webasto SE, 82131 Stockdorf (DE)
(72) Erfinder: HÖLZEL, Dominik, 82140 Olching (DE); RIPA, Thomas, 82211 Herrsching (DE); LIPOVSKY, Christian, 80809 München (DE)
(74) Vertreter: Epping - Hermann - Fischer
(86) Internationale Anmeldenummer: PCT/EP2016/052405
(87) Internationale Veröffentlichungsnummer: WO 2016/124700

(56) Entgegenhaltungen:
- WO-A1-2014/123047
- DE-A1-102011 015 833
- DE-A1-102012 016 504

## Beschreibung

Die Erfindung betrifft eine Anordnung mit einem Deckel für ein Fahrzeugdach.

Anordnungen mit einem Deckel für ein Fahrzeugdach sind aus dem Stand der Technik vielfach bekannt. In einer Schließstellung verschließt der Deckel eine Dachöffnung des Fahrzeugdachs. Bei einem Öffnungsvorgang zum Freigeben der Dachöffnung wird ein (Antriebs-)Schlitten in Fahrzeuglängsrichtung nach hinten verfahren. Dabei wird der Deckel typischerweise ausgehend von einer Schließstellung nach hinten in eine Offenstellung verschoben. In seitlichen Bereichen des Deckels sind Ausstellmittel vorgesehen, um das Freigeben bzw. Schließen der Dachöffnung mittels des Deckels zu bewerkstelligen.

Aus der DE 10 2012 016504 A1 ist ein Schiebedachsystem bekannt mit zwei Führungsschienen, einem Schlitten in jeder Führungsschiene, der verschiebbar in dieser gelagert ist, einem Funktionsbauteil, das verschiebbar in der Führungsschiene aufgenommen ist und mittels eines Rasthakens in einer Ausstellposition festgestellt werden kann, wobei der Rasthaken zwischen einer Freigabestellung und einer Raststellung verstellbar ist, wobei der Rasthaken in der Raststellung in eine Öffnung der Führungsschiene eingreift, und mit einem Deckel, der durch Verschieben des Schlittens aus einer geschlossenen Stellung heraus geöffnet werden kann, wobei ein Sicherungselement vorgesehen ist, das den Rasthaken mechanisch in der Raststellung halten kann, dadurch gekennzeichnet, dass der Sicherungshebel zwischen der Freigabestellung und der Sicherungsstellung um eine Schwenkachse schwenkbar ist Eine Aufgabe, die der Erfindung zugrunde liegt, ist es, eine Anordnung mit einem Deckel für ein Fahrzeugdach zu beschreiben, welche ein sicheres und präzises Freigeben bzw. Schließen einer Dachöffnung mittels des Deckels ermöglicht.

Erfindungsgemäß wird eine Anordnung mit einem Deckel für ein Fahrzeugdach offenbart. Die Anordnung weist einen in Fahrzeuglängsrichtung mittels eines Antriebs in einer Führungsschiene verschiebbaren Schlitten auf. Weiter weist die Anordnung ein Betätigungselement mit einem mechanischen Koppelelement auf. Zudem weist die Anordnung ein bezüglich der Führungsschiene ortsfest angeordnetes Bauelement auf, in welchem eine Tasche ausgebildet ist, die in ihrer Formgebung an das mechanische Koppelelement angepasst ist. Des Weiteren ist ein bezüglich der Führungsschiene ortsfest gelagertes elastisches Element vorgesehen.

In einem ersten Zustand ragt das elastische Element mit einem Verriegelungsbereich in die Tasche hinein. In einem zweiten Zustand ist der Verriegelungsbereich des elastischen Elements aus der Tasche herausgeführt. Ausgehend von einer Schließstellung des Deckels ist bei einem Verschieben des Schlittens in Fahrzeuglängsrichtung in einem ersten Bewegungsabschnitt des Schlittens das elastische Element mittels des Schlittens von dem ersten Zustand in den zweiten Zustand überführbar. In einem anschließenden zweiten Bewegungsabschnitt des Schlittens ist ein Einführen des mechanischen Koppelelements in die Tasche steuerbar, so dass ein Verschieben des Betätigungselements in Fahrzeuglängsrichtung verriegelt ist. In einem anschließenden dritten Bewegungsabschnitt des Schlittens ist das elastische Element von dem zweiten Zustand in den ersten Zustand überführbar und dann ein Bewegen des Koppelelements aus der Tasche verriegelt.

Bei der Anordnung handelt es sich beispielsweise um eine Anordnung für ein Schiebedach, ein Spoilerdach oder ein außen geführtes Schiebedach. Typischerweise wird mittels der Anordnung der Deckel in Fahrzeuglängsrichtung nach hinten verschoben, so dass eine Dachöffnung des Fahrzeugdachs freigegeben wird.

Verwendete Ortsangaben oder Richtungsangaben wie "hinten" oder "vorne" sind auf die Fahrzeuglängsrichtung bezogen. Die Fahrzeuglängsrichtung kann auch als Horizontalrichtung oder X-Richtung des mathematischen Rechtsystems bezeichnet werden. Ein Anheben oder Ausstellen des Deckels würde im Wesentlichen in einer Vertikalrichtung beziehungsweise Z-Richtung des mathematischen Rechtsystems erfolgen. Unter einen hinteren Bereich des Deckels ist beispielsweise der Bereich zu verstehen, welcher ausgehend von einer Mitte des Deckels einem Fahrzeugheck zugewandt ist.

Bei dem Betätigungselement handelt es sich beispielsweise um ein mechanisches Übertragungselement, mittels welchem Kräfte oder Bewegungen auf ein anderes Element der Anordnung übertragen werden. Beispielsweise trägt das Betätigungselement mittelbar oder unmittelbar zu einer Bewegung des Deckels, wie ein Ausstellen oder Anheben des Deckels, bei. Das Betätigungselement ist beispielsweise als Hebel, Lenker oder Stange ausgebildet. Das Betätigungselement ist beispielsweise verschiebbar entlang der Fahrzeuglängsrichtung angeordnet. Dabei kann das Betätigungselement von dem Schlitten betätigt werden. Das Betätigungselement und das Koppelelement können starr miteinander verbunden sein. Beispielsweise sind das Koppelelement und die Ausstellstange einstückig hergestellt.

Das Bauelement ist ein separates bezüglich der Führungsschiene ortfestes Element der Anordnung. Alternativ ist das Bauelement Teil der Führungsschiene.

Die Anordnung sieht vor, dass mittels des Schlittens das elastische Element betätigbar ist. Dabei ist das elastische Element mittels des Schlittens von dem ersten Zustand in den zweiten Zustand und/oder umgekehrt überführbar.

Bei einem Verschieben des Schlittens ausgehend von der Schließstellung des Deckels wird in einem ersten Bewegungsabschnitt zunächst das elastische Element in den zweiten Zustand gesteuert, in welchem die Tasche für das Einführen des Koppelelements freigegeben ist. In dem zweiten Bewegungsabschnitt des Schlittens wird das Koppelelement in die Tasche gesteuert, so dass eine Bewegung des Betätigungselements zumindest entlang der Fahrzeuglängsrichtung verriegelt ist. Beispielsweise steuert der Schlitten das Betätigungselement derart, dass das Koppelelement in die Tasche geführt wird. In dem dritten Bewegungsabschnitt wird das elastische Element wiederum in den ersten Zustand überführt, wobei der Verriegelungsabschnitt in die Tasche hineinragt und ein Bewegen des Koppelelements aus der Tasche verriegelt. Zum Verriegeln wirkt der Verriegelungsabschnitt des elastischen Elements mit dem Koppelelement mechanisch zusammen. Die Bewegung des Koppelelements in Richtung der Tasche ist im Wesentlichen senkrecht zu einer Bewegung entlang der Fahrzeuglängsrichtung. Beispielsweise erfolgt die Bewegung des Koppelelements in Richtung der Tasche in Y-Richtung.

Die Anordnung ermöglicht ein sicheres Verriegeln des Betätigungselements. Durch das Verriegeln des Koppelelements in der Tasche mittels des elastischen Elements wird zu einem sicheren Freigeben beziehungsweise Schließen der Dachöffnung mittels des Deckels beigetragen. Insbesondere wird mittels des elastischen Elements in dem ersten Zustand verhindert, dass das mechanische Koppelelement aus der Tasche herausgeführt werden kann. Dies ist beispielsweise besonders dann von Vorteil, wenn der Deckel in einer bestimmten Position sicher gehalten werden soll. Soll der Deckel beispielsweise in der Position gehalten werden, in welcher die Dachöffnung zumindest teilweise freigegeben ist, so ist dadurch sichergestellt, dass das Betätigungselement in seiner Position arretiert ist. Somit ist eine hohe Lagesicherung des Betätigungselements bewerkstelligt. Ein weiterer Vorteil ergibt sich dadurch, dass ein Missbrauch der Anordnung beziehungsweise ihrer Kinematik weitestgehend vermieden wird. Ein missbräuchliches Herausziehen des mechanischen Koppelelements aus der Tasche, beispielsweise mit Hilfe eines spitzen Gegenstands, wird verhindert oder erheblich erschwert. Auch ein unabsichtliches Lösen des Koppelelements aus der Tasche, beispielsweise bei einem Reinigen oder Fetten der Anordnung und ihrer Kinematik, wird verhindert. Ein unfreiwilliges oder missbräuchliches Herausführen des Koppelelements aus der Tasche könnte schwerwiegende Folgen bis hin zu Verletzungen von Personen haben.

Das Einführen des Koppelelements in die Tasche geschieht unter Formschluss. Dieser gewährleistet, dass eine Bewegung des Betätigungselements beziehungsweise des Koppelelements in einer Ebene, welche normal zu der Einführrichtung des Koppelelements in die Tasche verläuft, verriegelt ist. Diese Ebene, ist beispielsweise die X-Z-Ebene der Anordnung.

Das elastische Element wird bei der Betätigung mittels des Schlittens im Wesentlichen in einer Ebene beim Wechsel zwischen den beiden Zuständen bewegt. Diese Ebene fällt beispielsweise mit der zuvor beschriebenen, normal zur Einführrichtung verlaufenden Ebene zusammen. Beispielsweise wird das elastische Element zum Überführen in den zweiten Zustand zumindest teilweise durch den Schlitten angehoben und zum Überführen in den ersten Zustand abgesenkt.

Gemäß einer Ausgestaltung ragt das elastische Element in dem ersten Zustand durch eine erste Nut, die in dem Bauelement ausgebildet ist, in die Tasche hinein. Mittels der in dem Bauelement vorgesehenen Nut ist es möglich, dass der Verriegelungsbereich des elastischen Elements sich in die Tasche hinein erstrecken kann. Damit ist gewährleistet, dass für den Fall, dass das Koppelelement in die Tasche eingeführt ist, der Verriegelungsbereich mit dem Koppelelement zur Verriegelung dessen innerhalb der Tasche zusammenwirken kann.

Gemäß einer weiteren Ausgestaltung ist das elastische Element in der ersten Nut geführt. Dadurch ist das elastische Element zumindest an zwei Seiten sicher geführt und ist in einer Ebene mittels des Schlittens bewegbar. Die Führung dient dazu, dass das elastische Element sicher von dem ersten Zustand in den zweiten Zustand beziehungsweise umgekehrt geführt werden kann.

Gemäß einer weiteren Ausgestaltung ist in dem Koppelement eine zweite Nut ausgebildet, in welche, wenn sich das Koppelelement in der Tasche befindet, das elastische Element in dem ersten Zustand zumindest teilweise zum Verriegeln des Koppelelements eingreift. Insbesondere ist der Verriegelungsbereich in die zweite Nut eingeführt. Dadurch wird zu einem sicheren Verriegeln des Koppelelements in der Tasche beigetragen. Beispielsweise ist die erste Nut fluchtend zu der zweiten Nut, wenn das Koppelelement in die Tasche eingeführt ist. Die zweite Nut ist alternativ als Rille, beispielsweise als vertikale Rille, ausgebildet.

Gemäß einer weiteren Ausgestaltung ist die zweite Nut des Koppelelements zumindest teilweise trichterförmig ausgebildet. Dadurch ist sichergestellt, dass der Verriegelungsbereich beim Überführen des elastischen Elements von dem zweiten Zustand in den ersten Zustand sicher in die zweite Nut des Koppelelements eingeführt wird. Dadurch wird beispielsweise ein Verkanten oder Verhaken des Verriegelungsbereichs verhindert. Des Weiteren wird dadurch ein sanftes Einführen des Verriegelungsbereichs in die zweite Nut, insbesondere ohne Störgeräusche, ermöglicht.

Gemäß einer weiteren Ausgestaltung ist ein Ende des elastischen Elements ortsfest gelagert und der Verriegelungsbereich des elastischen Elements mittels des Schlittens bewegbar. Durch die ortsfeste Lagerung ist das elastische Element mit dem einen Ende in einer festgelegten Position gelagert. Dadurch ist das elastische Element mittels des Schlittens derart bewegbar, dass der Verriegelungsbereich um das eine Ende des elastischen Elements gegen eine Federkraft bewegbar ist.

Gemäß einer weiteren Ausgestaltung ist das elastische Element in dem ersten Zustand vorgespannt und schlägt gegen ein Anschlagelement an. Mittels des Anschlagelements wird sichergestellt, dass das elastische Element eine vordefinierte Position in dem ersten Zustand einnimmt und in dieser Position gehalten wird.

Gemäß einer weiteren Ausgestaltung weist das elastische Element einen Kontaktbereich auf, der beim Verschieben des Schlittens zum Überführen des elastischen Elements von dem ersten Zustand in den zweiten Zustand und/oder beim Überführen von dem zweiten in den ersten Zustand in Kontakt mit dem Schlitten ist. Zum Betätigen des elastischen Elements kontaktiert der Schlitten bei dessen Verschieben entlang der Fahrzeuglängsrichtung das elastische Element in dem Kontaktbereich. Bei dem Kontaktbereich handelt es sich nicht notwendigerweise um einen einzelnen Punkt des elastischen Elements, sondern vielmehr um einen Längsabschnitt des elastischen Elements entlang der Führungsschiene. Beispielsweise kontaktiert der Schlitten den Kontaktbereich mittels einem oder mehrerer Gleiter des Schlittens, die in der Führungsschiene geführt sind. Befindet sich das elastische Element in dem ersten Zustand, ist nicht zwingend Voraussetzung, dass der Schlitten mit dem Kontaktbereich des elastischen Elements in Kontakt steht.

Gemäß einer weiteren Ausgestaltung ist der Kontaktbereich als Kulissenführung ausgebildet. Dadurch ist eine sanfte Bewegungsführung bei der Überführung des elastischen Elements von dem ersten Zustand in den zweiten Zustand und umgekehrt möglich. Weiter ist dadurch eine verschleißarme Ausgestaltung gewährleistet. Zudem werden Schaltgeräusche beim Überführen des elastischen Elements von dem einen in den anderen der beiden Zustände reduziert oder vermieden.

Gemäß einer weiteren Ausgestaltung weist der Kontaktbereich einen ersten Teilabschnitt auf, in welchem sich ein Abstand einer einem Boden der Führungsschiene zugewandten Außenseite des elastischen Elements zu dem Boden in Fahrzeuglängsrichtung nach hinten verringert. Dadurch wird beispielsweise ein sanftes Anheben beziehungsweise Absenken des elastischen Elements beim Überführen von dem ersten in den zweiten Zustand oder umgekehrt ermöglicht. Dies ist abhängig davon, ob der Schlitten in Fahrzeuglängsrichtung nach hinten oder nach vorne bewegt wird.

Gemäß einer weiteren Ausgestaltung weist der Kontaktbereich einen zweiten Teilabschnitt auf, in welchem sich ein Abstand einer einem Boden der Führungsschiene zugewandten Außenseite des elastischen Elements zu dem Boden in Fahrzeuglängsrichtung nach hinten vergrößert. Der zweite Teilabschnitt schließt sich beispielsweise an den ersten Teilabschnitt an. Dadurch wird ermöglicht, dass bei Verschieben des Schlittens entlang der Fahrzeugrichtung nach hinten das elastische Element zunächst angehoben und anschließend wieder abgesenkt wird. Dadurch lässt sich das elastische Element von dem ersten Zustand in den anderen Zustand überführen.

Gemäß einer weiteren Ausgestaltung ist das elastische Element mittels des Schlittens in einer Ebene bewegbar, welche von der Fahrzeuglängsrichtung und einer dazu senkrechten Vertikalrichtung aufgespannt wird. Die Vertikalrichtung entspricht dabei der Z-Richtung des mathematischen Rechtsystems. Dadurch wird nur wenig Bauraum in einer Fahrzeugquerrichtung beansprucht. Weiterhin kann das elastische Element sehr klein dimensioniert sein.

Gemäß einer weiteren Ausgestaltung ist das elastische Element zwischen dem Bauelement und dem Betätigungselement angeordnet. Die räumliche Anordnung des elastischen Elements bezieht sich auf eine Vertikalebene der Anordnung. Die Vertikalebene wird beispielsweise von der Fahrzeuglängsrichtung und einer dazu senkrechten Vertikalrichtung wie der Z-Richtung aufgespannt. Aufgrund der Anordnung des elastischen Elements ist dieses somit nahezu unzugänglich für einen Missbrauch geschützt.

Gemäß einer weiteren Ausgestaltung ist das Betätigungselement mittels des Schlittens in Fahrzeuglängsrichtung verschiebbar. Das Betätigungselement ist in der Schließstellung des Deckels mit dem Schlitten gekoppelt und koppelt nach dem Steuern des Koppelelements in die Tasche bei einem weiteren Verschieben des Schlittens von dem Schlitten ab. Mittels der Ausstellstange wird beispielsweise der Deckel in einem hinteren Bereich angehoben und in eine Lüfterstellung gebracht. Ausgehend von der Schließstellung des Deckels wird bei Verschieben des Schlittens das Betätigungselement in Fahrzeuglängsrichtung nach hinten mitgenommen, wobei anschließend das Koppelelement des Betätigungselements in die Tasche eingeführt wird. Anschließend koppelt das Betätigungselement von dem Schlitten ab. Nach dem Abkoppeln ist das Betätigungselement somit in seiner Position arretiert, wenn das elastische Element sich in dem ersten Zustand befindet und somit ein Hinausbewegen des mechanischen Koppelelements aus der Tasche verriegelt ist.

Gemäß einer weiteren Ausgestaltung ist das Betätigungselement bei Verschieben des Schlittens ausgehend von der Schließstellung des Deckels in einer Auskoppelebene von dem Schlitten entkoppelbar und im zweiten Bewegungsabschnitt relativ zu der Führungsschiene durch Einführen des Koppelements in die Tasche verriegelbar, wobei zum Verriegeln das Einführen des Koppelelements im Wesentlichen in Normalenrichtung der Auskoppelebene erfolgt. Beim Auskoppeln wird eine Kopplung zur Mitnahme des Betätigungselements mittels des Schlittens in Fahrzeuglängsrichtung nach hinten gelöst. Unter der Auskoppelebene wird diejenige Ebene verstanden, in welcher die Kopplung zwischen dem Schlitten und dem Betätigungselement gelöst wird. Beispielsweise ist das Betätigungselement über ein Eingriffselement, wie das Koppelelement, einen Nocken, eine Bolzen, ein Gleitelement oder dergleichen mit dem Schlitten gekoppelt. Dies bedeutet, dass das Betätigungselement mit dem Schlitten zunächst in X-Richtung verriegelt ist. Bei einem weiteren Verschieben entkoppelt das Eingriffselement von dem Schlitten. Dabei ist das Betätigungselement nicht mehr in X-Richtung mit dem Schlitten verriegelt. Das Lösen erfolgt dabei in der Auskoppelemente, welche von der X-Richtung und einer zu der X-Richtung senkrechten Richtung aufgespannt wird, beispielsweise der Z-Richtung. Beispielsweise ist das Eingriffselement in einer Kulisse des Schlittens geführt und verlässt zum Auskoppeln diese in der Auskoppelebene.

Zum Auskoppeln weist beispielsweise der Schlitten eine Verriegelungskulisse und das Betätigungselement ein weiteres Koppelelement auf. Alternativ weist das Betätigungselement die Verriegelungskulisse und der Schlitten das weitere Koppelelement auf. Das Verriegeln wird durch ein Zusammenspiel der Verriegelungskulisse und dem weiteren Koppelelement derart gesteuert, dass das Koppelelement des Betätigungselements in Normalenrichtung zu der Auskoppelebene in die Tasche formschlüssig eingeführt wird. Die Normalenrichtung ist beispielsweise die zur X-Z-Ebene normal verlaufende Y-Richtung des mathematischen Rechtsystems. Durch das formschlüssige Einführen wird erreicht, dass die Ausstellstange in X- und Z-Richtung, welche parallel zu der Auskoppelebene verlaufen, verriegelt ist. Somit ist das Betätigungselement in seiner Position arretiert.

Gemäß einer weiteren Ausgestaltung ist das Betätigungselement in Schließstellung des Deckels über das Koppelelement mit dem Schlitten gekoppelt. Dadurch ist es möglich, dass zur Betätigung des Betätigungselements und zum Verriegeln dessen ein und dasselbe Koppelelement des Betätigungselements verwendet wird. Dadurch kann insgesamt Bauraum eingespart werden, sowie Materialkosten und Herstellungskosten reduziert werden.

Gemäß einer weiteren Ausgestaltung wird die Auskoppelebene von der Fahrzeuglängsrichtung und einer dazu senkrechten Vertikalrichtung aufgespannt. Beispielsweise verläuft die Auskoppelebene parallel zu der Ebene, in welcher das elastische Element bewegt wird.

Gemäß einer weiteren Ausgestaltung ist das Betätigungselement als Ausstellstange ausgebildet. Mittels der Ausstellstange wir ein Anheben bzw. Ausstellen oder Absenken des Deckels gesteuert. Die Ausstellstange ist über einen hinteren Ausstellhebel mit dem Deckel im hinteren Bereich gekoppelt. Koppelt die Ausstellstange von dem Schlitten wie zuvor beschrieben ab, beziehungsweise wenn der Deckel maximal ausgestellt angehoben worden ist, so sind die Ausstellstange und auch der hintere Ausstellhebel in ihrer Position arretiert aufgrund des in die Tasche eingeführten Koppelelements. Dabei wird ein Herausführen des Koppelelements aus der Tasche mittels des elastischen Elements verriegelt. Dadurch ist eine sichere Funktion und Kinematik der Anordnung gewährleistet.

Gemäß einer weiteren Ausgestaltung ist das elastische Element als Federelement ausgebildet, insbesondere als Metall- oder Federdraht, Wickel- oder Drehfeder.

Gemäß einer weiteren Ausgestaltung ist das Koppelelement als Gleitelement, insbesondere als Drehgleiter, ausgebildet. Weiterhin kann das Koppelelement auch als Nocken, Gleiter oder dergleichen ausgebildet sein.

Weitere Ausgestaltungen sind in der nachfolgenden, ausführlichen Beschreibung eines Ausführungsbeispiels unter Zuhilfenahme der angehängten Figuren beschrieben.

Elemente oder Merkmale gleicher Konstruktion oder Funktion sind figurenübergreifend mit den gleichen Bezugszeichen versehen. Bereits mit Hilfe von Bezugszeichen beschriebene Elemente oder Merkmale sind nicht zwingend in allen Figuren mit Bezugszeichen versehen.

In den Figuren zeigen:
- Figur 1: eine schematische, perspektivische Ansicht eines Fahrzeugs,
- Figur 2: eine schematische Seitenansicht einer Anordnung mit einem Deckelträger für ein Fahrzeugdach des Fahrzeugs,
- Figur 3: eine perspektivische Teilansicht der Anordnung in einer Schließstellung,
- Figuren 4A und 4B: eine Seitenteilschnittansicht sowie eine perspektivische Teilschnittansicht der Anordnung in der Schließstellung,
- Figuren 5A und 5B: eine weitere Seitenteilschnittansicht sowie eine perspektivische Teilschnittansicht der Anordnung in einem ersten Bewegungsabschnitt eines Schlittens,
- Figuren 6A und 6B: eine weitere Seitenteilschnittansicht sowie eine perspektivische Teilschnittansicht der Anordnung in einem zweiten Bewegungsabschnitt eines Schlittens,
- Figuren 7A und 7B: eine weitere Seitenteilschnittansicht sowie eine perspektivische Teilschnittansicht der Anordnung in dem zweiten Bewegungsabschnitt des Schlittens,
- Figuren 8A und 8B: eine weitere Seitenteilschnittansicht sowie eine perspektivische Teilschnittansicht der Anordnung in einem dritten Bewegungsabschnitt eines Schlittens,
- Figur 9: eine perspektivische Ansicht der Anordnung in dem zweiten Bewegungsabschnitt des Schlittens,
- Figur 10: eine perspektivische Ansicht der Anordnung in dem dritten Bewegungsabschnitt des Schlittens, und
- Figur 11: eine Querschnittansicht der Anordnung.

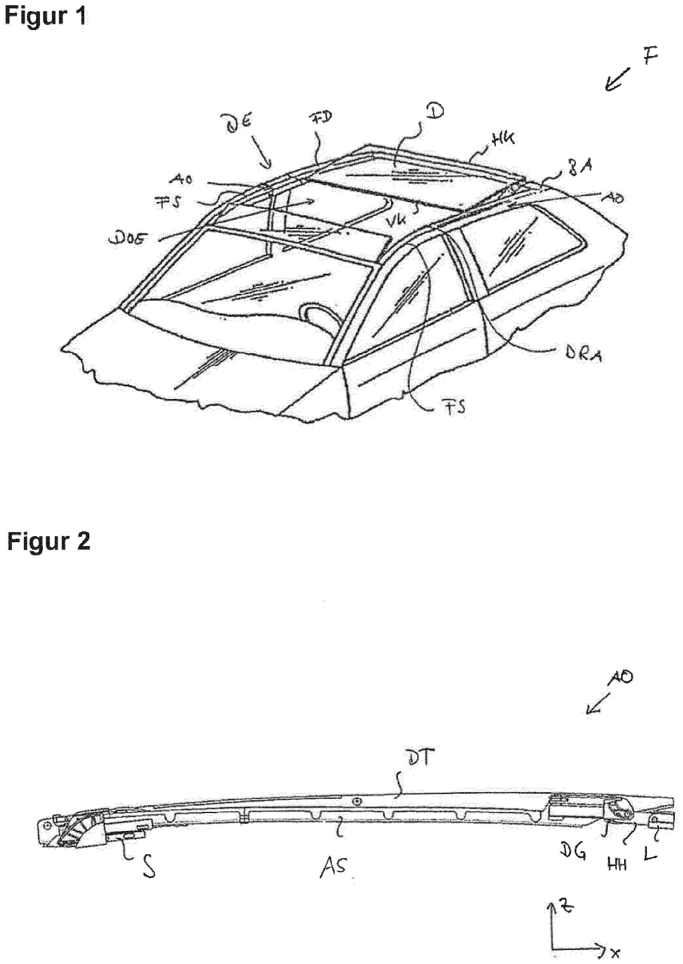

Figur 1 zeigt eine schematische, perspektivische Ansicht eines Fahrzeugs F mit einem Fahrzeugdach FD. Das Fahrzeugdach FD weist einen fahrzeugfesten Befestigungsabschnitt BA auf, der als Dachschale ausgebildet ist. Der fahrzeugfeste Befestigungsabschnitt BA ist mit einer Dachöffnung DOE versehen, die mittels eines verstellbaren, beweglichen Dachelements DE wahlweise verschlossen oder zumindest teilweise freigebbar ist. Die Dachöffnung DOE wird von einem an dem Fahrzeugdach FD ausgebildeten Dachrahmenabschnitt DRA begrenzt.

Zum Freigeben oder Schließen der Dachöffnung DOE sind Anordnungen AO mit Ausstellmitteln vorgesehen, welche vorzugsweise beidseitig bezüglich des Dachrahmenabschnitts DRA angeordnete Führungsschienen FS umfassen.

Das Dachelement DE hat einen Deckel D und ist relativ verschiebbar bezüglich der Führungsschienen FS im Bereich des Befestigungsabschnitts BA gelagert. Dabei ist das Dachelement DE über einen Deckelträger in den Führungsschienen FS verschiebbar gelagert. Der Deckel D ist vorzugsweise als Glasdeckel ausgebildet.

Die Ausstellmittel dienen dem Zweck, den Deckel D, der die Dachöffnung DOE des Fahrzeugdachs FD verschließt, aus einer Schließstellung in eine Offenstellung zu verschieben, um so die Dachöffnung DOE des Fahrzeugdachs FD freizugeben. Bei einem typischen Bewegungsablauf zum Öffnen bzw. Freigeben der Dachöffnung wird zunächst eine hintere Kante HK des Deckels D ausgestellt. Diese Zwischenposition wird auch als eine Lüfterstellung bezeichnet. Im weiteren Verlauf der Öffnungsbewegung wird der Deckel D in Fahrzeuglängsrichtung nach hinten in die Offenstellung verschoben.

Dieser typische Bewegungsablauf wird mit Hilfe der Anordnungen AO bewerkstelligt, welche anhand der folgenden Figuren 2 bis 11 genauer beschrieben werden. Dabei ist in den Figuren 2 bis 11 jeweils nur eine Anordnung AO oder ein Teil dieser auf einer Seite mit der zugehörigen Mechanik dargestellt. Alle Teile der Anordnung AO sind jedoch spiegelbildlich zu einer Mittellängsebene des Fahrzeugs F auf beiden Seiten der Dachöffnung DOE angeordnet. Die Anordnung AO kann auch als Ausstellvorrichtung bezeichnet werden. Es gilt zu beachten, dass in den Figuren 2 bis 11 teilweise ein Deckelträger DT dargestellt ist, welcher mit dem Deckel D mechanisch fest gekoppelt ist. Ein Verschieben oder Bewegen des Deckels D ist demnach gleichbedeutend mit einem Verschieben oder Bewegen des Deckelträgers DT.

Weiter ist in den Figuren 2 bis 11 jeweils ein Koordinatensystem dargestellt, welches die Richtungen X, Y und Z zeigt. Das Koordinatensystem entspricht dem mathematischen Rechtssystem. Die X-Richtung kann dabei auch als Fahrzeuglängsrichtung oder Horizontalrichtung bezeichnet werden. Die Z-Richtung kann auch als Vertikalrichtung bezeichnet werden.

Figur 2 zeigt eine schematische Seitenansicht der Anordnung AO. Dabei ist die Schließstellung des Deckels D dargestellt. Die Anordnung AO umfasst einen Schlitten S, der in Fahrzeuglängsrichtung mittels eines Antriebs in einer Führungsschiene FS verschiebbar ist. Weiter sind eine Ausstellstange AS, ein ortsfestes Lager L sowie ein hinterer Ausstellhebel HH vorgesehen. Der hintere Ausstellhebel HH ist schwenkbar mit einem Deckelgleiter DG verbunden, welcher verschiebbar an dem Deckelträger DT gekoppelt ist. Die Ausstellstange AS kann auch als Betätigungselement bezeichnet werden.

Wird ausgehend von der Schließstellung des Deckels D der Schlitten S nach hinten verschoben, so wird die Ausstellstange AS ebenfalls parallel zur Fahrzeuglängsrichtung nach hinten verschoben, da die Ausstellstange AS mit dem Schlitten S zunächst mechanisch gekoppelt ist. Dabei wird der hintere Ausstellhebel HH bezüglich des Lagers L verschwenkt, so dass der Deckelträger DT beziehungsweise der Deckel D im Bereich der hinteren Kante HK ausgestellt beziehungsweise angehoben wird. In diesem ausgestellten Zustand befindet sich der Deckel D in der Lüfterstellung. Wird der Schlitten S weiter nach hinten verschoben, wird der Schlitten S von der Ausstellstange AS entkoppelt. Dies bedeutet, dass die Ausstellstange AS nicht mehr in X-Richtung mit dem Schlitten S verriegelt ist. Gleichzeitig wird die Ausstellstange AS im Bereich ihres vorderen Endes durch einen Verriegelungsmechanismus ortsfest bezüglich der Führungsschiene FS festgelegt. Dies bedeutet, dass der hintere Ausstellhebel HH ebenfalls arretiert in der ausgestellten Position gehalten ist. Bei einem weiteren Verschieben des Schlittens S nimmt dieser den Deckelträger DT mit und schiebt den Deckelträger DT und somit den Deckel D über das Fahrzeugdach FD in die Offenstellung. Dies ist dadurch möglich, dass der hintere Ausstellhebel HH verschiebbar über den Gleiter G mit dem Deckelträger G gekoppelt ist.

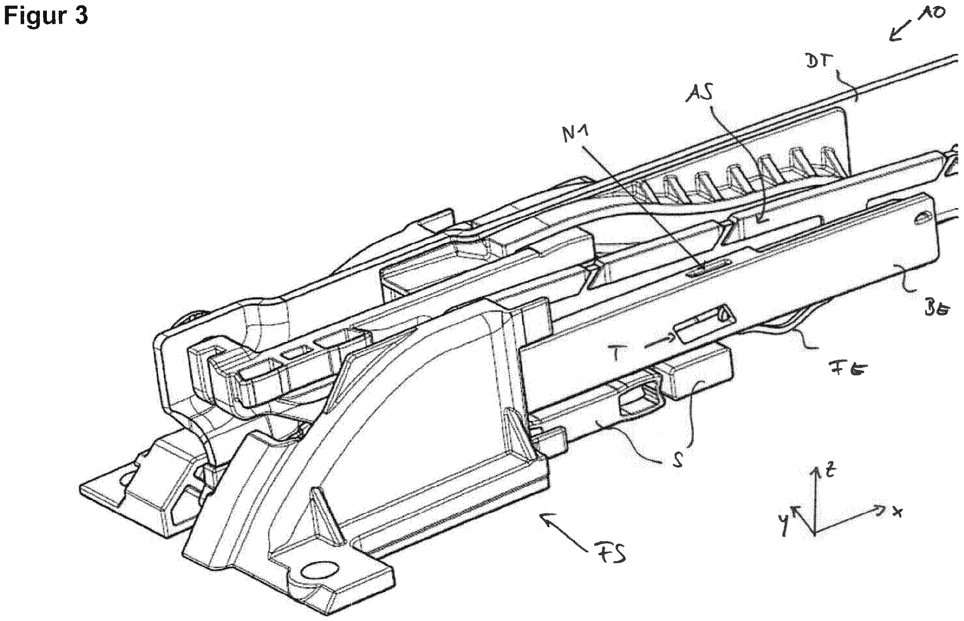

Nachfolgend wird anhand der Figuren 3 bis 11 detailliert auf die Anordnung AO im vorderen Bereich des Deckels D eingegangen. Insbesondere wird ein sicherer Verriegelungsmechanismus der Ausstellstange AS nach deren Entkoppeln von dem Schlitten S beschrieben. Das Entkoppeln der Ausstellstange AS von dem Schlitten S kann auf verschiedene Weise geschehen und wird im Folgenden nicht näher erläutert. Beispielhaft sei auf die eingangs erwähnte Verriegelungskulisse und das weitere Koppelelement verwiesen. Entscheidend ist lediglich, dass die Entkopplung stattfindet.

Figur 3 zeigt eine perspektivische Ansicht der Anordnung AO in einem vorderen Bereich. Dabei ist die Schließstellung des Deckels D gezeigt. Die Anordnung AO weist ein Bauelement BE auf, welches im Ausführungsbeispiel Teil einer Führungsschiene FS ist. Somit ist das Bauelement BE ortsfest bezüglich der Führungsschiene FS angeordnet. In dem Bauelement BE ist eine Tasche T ausgebildet. Weiterhin ist ein Federelement FE vorgesehen, welches ortsfest an dem Bauelement BE gelagert ist. Bei dem Federelement FE handelt es sich um einen gebogenen Metalldraht. Das Federelement FE kann als ein elastisches Element wie eingangs beschrieben verstanden werden.

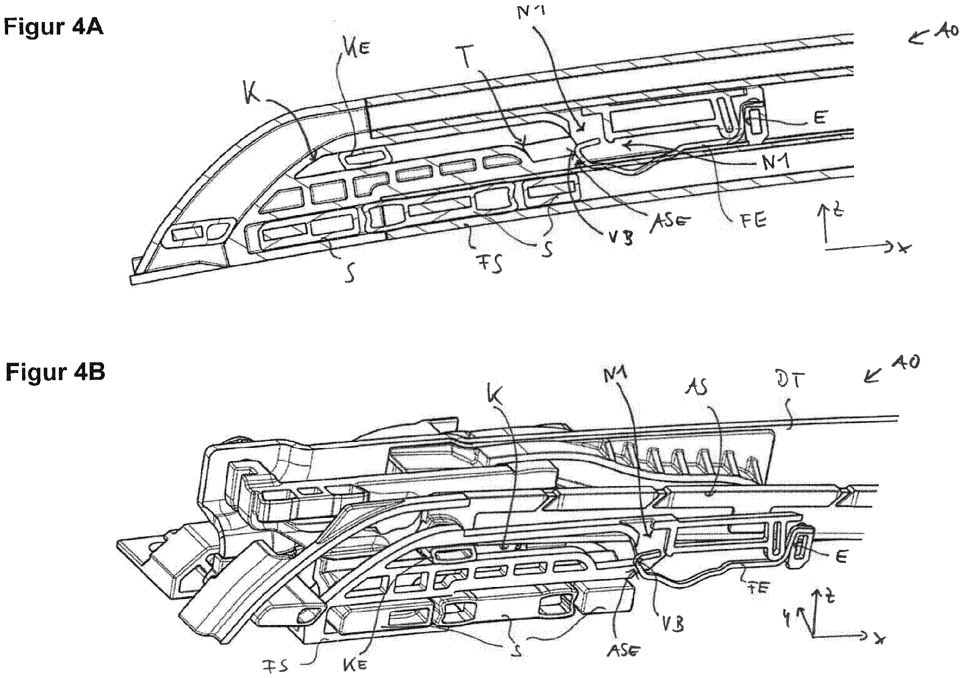

Weitere Details der Anordnung AO werden anhand der Figuren 4A bis 11 beschrieben. Dabei wird der Bewegungsablauf des Schlittens S ausgehend von der Schließstellung des Deckels D erläutert. Die Figuren 4A bis 8B sind in Figurenpaare unterteilt, welche durch die Suffixe "A" und "B" gekennzeichnet sind. Ein Figurenpaar, beispielsweise 4A und 4B, zeigt dabei die Anordnung AO in einem bestimmten Zustand des Bewegungsablaufs. In einem Figurenpaar sind dabei jeweils eine Seitenteilschnittansicht sowie eine perspektivische Teilschnittansicht der Anordnung AO gezeigt.

In den Figuren 4A und 4B ist die Anordnung AO in Schließstellung des Deckels D gezeigt. Die Ausstellstange AS hat ein starr mit dieser verbundenes Koppelelement KE. Das Koppelelement KE ist in einer ortsfest bezüglich der Führungsschiene FS angeordneten Kulisse K geführt. Weiter ist die Ausstellstange AS in Schließstellung des Deckels D mit dem Schlitten S gekoppelt (nicht dargestellt). Weiter ist eine Kontur der Tasche T zu erkennen, welche in ihrer Formgebung an das Koppelelement KE der Ausstellstange AS angepasst ist. Weiter ist das Federelement FE dargestellt, welches mit einem Ende E an dem Bauelement BE ortsfest gelagert ist. Das Federelement FE erstreckt sich in Fahrzeuglängsrichtung und ist zumindest teilweise innerhalb einer ersten Nut N1 geführt, welche in das Bauelement BE eingebracht ist. Die erste Nut N1 ist schlitzartig in dem Bauelement BE ausgebildet. Die erste Nut N1 erstreckt sich zumindest teilweise in die Tasche T, so dass die Tasche T eine Öffnung zu der ersten Nut N1 hat. Mit anderen Worten verläuft die erste Nut N1 teilweise durch die Tasche T.

Das Federelement FE befindet sich in einem ersten Zustand, in welchem ein Verriegelungsbereich VB des Federelements FE in die Tasche T über die erste Nut N1 hineinragt. Im Ausführungsbeispiel ist der Verriegelungsbereich VB ein umgebogener Abschnitt des Federelements FE. Dabei schlägt das Federelement FE im ersten Zustand gegen ein Anschlagelement ASE unter Vorspannung an. Mit anderen Worten wirkt eine Federkraft des Federelements in negativer Z-Richtung nach unten. Somit ist das Federelement FE in dem ersten Zustand in einer vorbestimmten Position gehalten. Das Anschlagelement ASE ist Teil des Bauelements BE bzw. der Führungsschiene FS.

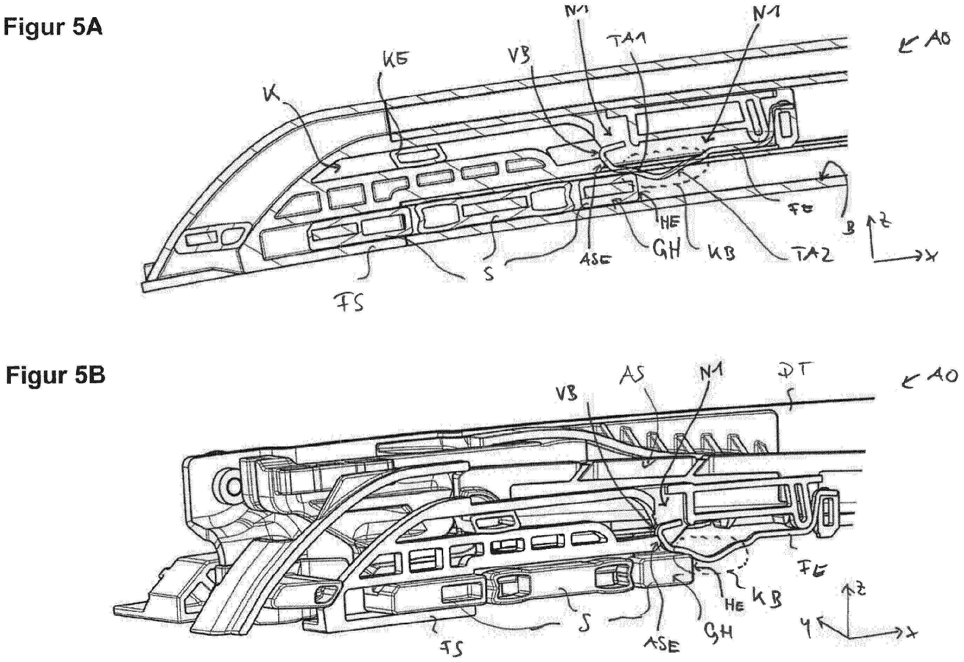

Wird nun der Schlitten S in einem ersten Bewegungsabschnitt in Fahrzeuglängsrichtung nach hinten verschoben, so nimmt dieser die Ausstellstange AS wie beschrieben nach hinten mit. Ein solcher Zustand der Anordnung AO ist in den Figuren 5A und 5B gezeigt.

In dem ersten Bewegungsabschnitt betätigt der Schlitten S das Federelement FE. Aufgrund der ortsfesten Lagerung des Federelements FE bezüglich der Führungsschiene FS, bewegt sich der Schlitten S zumindest teilweise unter dem Federelement FE hindurch. Dabei schlägt der Schlitten S zunächst über ein hinteres Ende HE in einem Kontaktbereich KB des Federelements FE an das Federelement FE an. Das hintere Ende HE ist Teil eines hinteren Gleiters GH des Schlittens S. Der Kontaktbereich KB ist so ausgebildet, dass dieser in eine Bewegungsbahn des Schlittens S hineinragt.

Der Kontaktbereich KB hat eine Kulissenführung mit einem ersten Teilabschnitt TA1 und einem zweiten Teilabschnitt TA2. Die Teilabschnitte TA1 und TA2 sind rampenartig ausgebildet, wobei sich in Schließstellung des Deckels D ein Abstand einer einem Boden B der Führungsschiene FS zugewandten Außenseite des ersten Teilabschnitts TA1 in Fahrzeuglängsrichtung nach hinten zu dem Boden B verringert. Umgekehrt verhält es sich in dem zweiten Teilabschnitt TA2, in welchem sich der Abstand einer Außenseite des Federelements FE zu dem Boden B in Fahrzeuglängsrichtung nach hinten vergrößert. In einem Übergangsbereich zwischen den Teilabschnitten TA1 und TA2 weist der Kontaktbereich KB den geringsten Abstand zu dem Boden B in der Schließstellung des Deckels D auf.

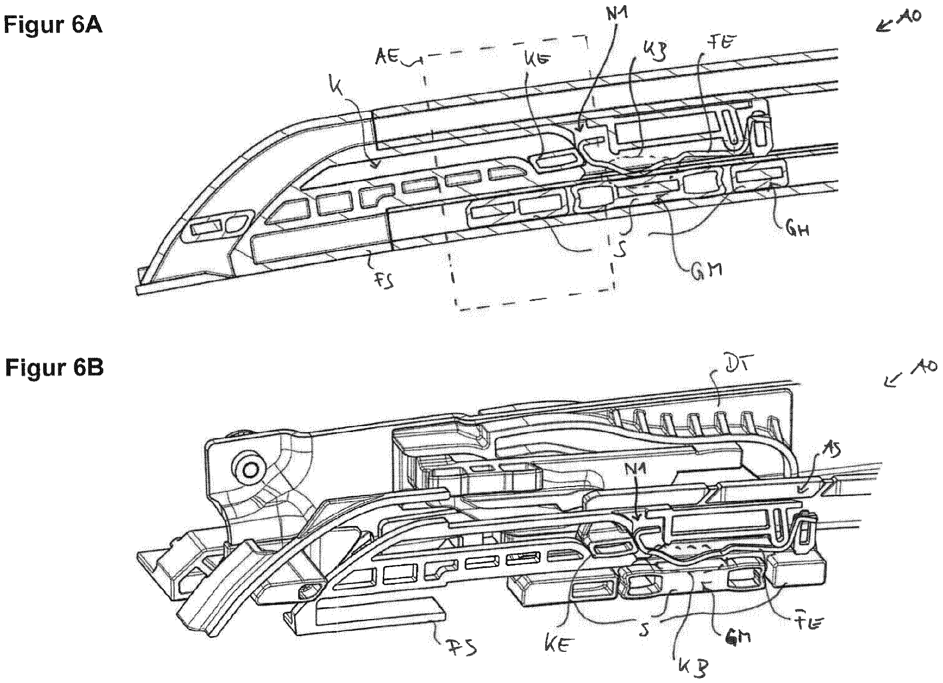

Aufgrund der Ausgestaltung des ersten Teilabschnitts TA1 wird das Federelement FE bei Verschieben des Schlittens S in der X-Z-Ebene in Z-Richtung entgegen einer Federkraft angehoben. Dabei wird das Federelement FE von dem ersten Zustand in einen zweiten Zustand überführt, in welchem der Verriegelungsbereich VB des Federelements FE nicht mehr über die erste Nut N1 in die Tasche T hineinragt. Somit ist die Tasche T vollständig freigegeben. Dabei kontaktiert der Schlitten S den Kontaktbereich KB in dem Übergangsbereich zwischen den beiden Teilabschnitten TA1 und TA2. Der zweite Zustand des Federelements FE ist in Figuren 6A und 6B gezeigt.

Wird der Schlitten S in einem zweiten Bewegungsabschnitt weiter in Fahrzeuglängsrichtung nach hinten bewegt, wird das Koppelelement KE der Ausstellstange AS in der Kulisse K derart verschoben, dass dieses fluchtend zu der Tasche T positioniert ist. Dies ist ebenfalls in den Figuren 6A und 6B gezeigt.

Bei einem weiteren Verschieben in dem zweiten Bewegungsabschnitt koppelt die Ausstellstange AS in einer Auskoppelebene AE von dem Schlitten S ab. Dadurch wird die Ausstellstange AS mit dem Koppelelement KE nicht mehr in Fahrzeuglängsrichtung nach hinten mitgenommen. Die Auskoppelebene AE ist gestrichelt in Figur 6A gezeigt und verläuft in X-Z-Richtung.

Gleichzeitig oder bei einem anschließenden Verschieben des Schlittens S wird die Ausstellstange AS mit dem Koppelelement KE in Y-Richtung, also normal zu der X-Z-Ebene bzw. der Auskoppelebene AE verfahren. Dabei taucht das Koppelelement KE formschlüssig in die Tasche T ein. Dies ist möglich, da sich das Federelement FE in dem zweiten Zustand befindet, in welchem die Tasche T vollständig freigegeben ist.

Es sei an dieser Stelle darauf hingewiesen, dass sich Kontaktpunkte des Schlittens S, in welchen dieser den Kontaktbereich des Federelements FE kontaktiert, in Abhängigkeit der Position des Schlittens S bezüglich der Führungsschiene FS ändern können. Solange sich das Federelement FE in dem zweiten Zustand befindet, ist dieses in dem Übergangsbereich zwischen dem ersten Teilabschnitt TA1 und dem zweiten Teilabschnitt TA2 mit dem Schlitten S in Kontakt, wobei sich Kontaktpunkte des Schlittens S während des Verschiebens ändern. Stets wirkt die Federkraft des Federelements FE in Richtung Boden B der Führungsschiene FS und drückt das Federelement FE gegen den Schlitten S. In dem in Figuren 6A und 6B gezeigten Bewegungsabschnitt wird das Federelement FE beispielsweise über einen mittleren Gleiter GM betätigt und in dem zweiten Zustand gegen die entgegenwirkende Federkraft gehalten.

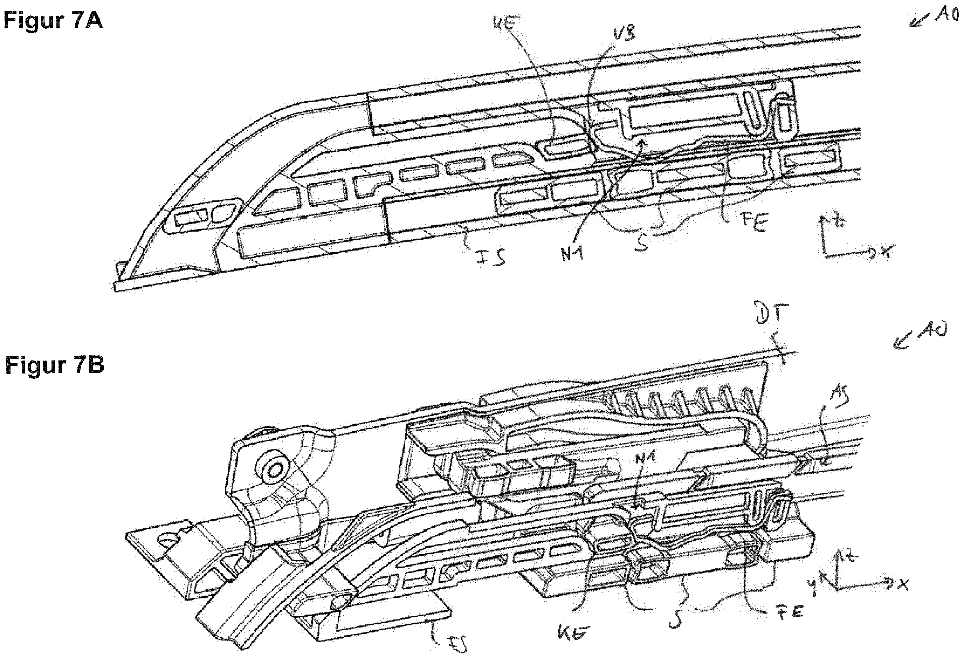

Sobald das Koppelelement KE in die Tasche T eingeführt ist, ist eine Bewegung der Ausstellstangen AS in der X-Z-Ebene, also insbesondere eine Bewegung in Fahrzeuglängsrichtung verriegelt. Somit ist die Ausstellstange AS in ihrer Position arretiert. Dabei ist der Deckel D an seiner hinteren Kante HK ausgestellt und befindet sich in der Lüfterstellung. Dies ist in den Figuren 7A und 7B gezeigt, wobei insbesondere in Figur 7B zu erkennen ist, dass das Koppelelement KE im Vergleich zu dem in Figuren 6A und 6B gezeigten Zustand in negativer Y-Richtung verschoben wurde.

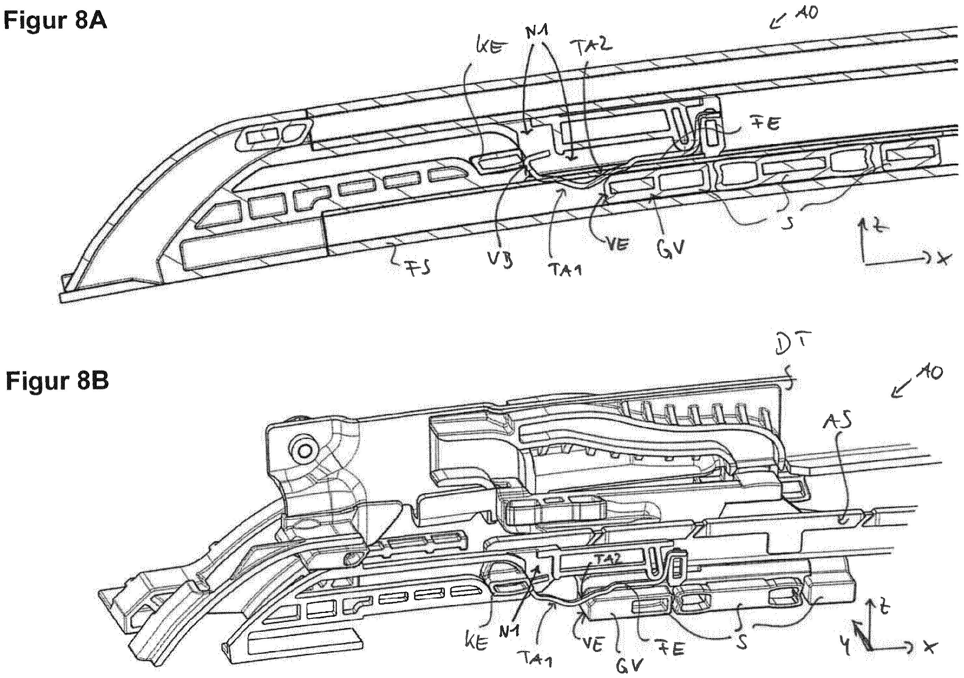

Damit die Ausstellstange AS sicher, vor allem missbrauchsgeschützt, in ihrer Position verbleibt, wird die Ausstellstange AS über das Federelement FE in einem dritten Bewegungsabschnitt des Schlittens S zusätzlich verriegelt. Dies ist in den Figuren 8A und 8B dargestellt.

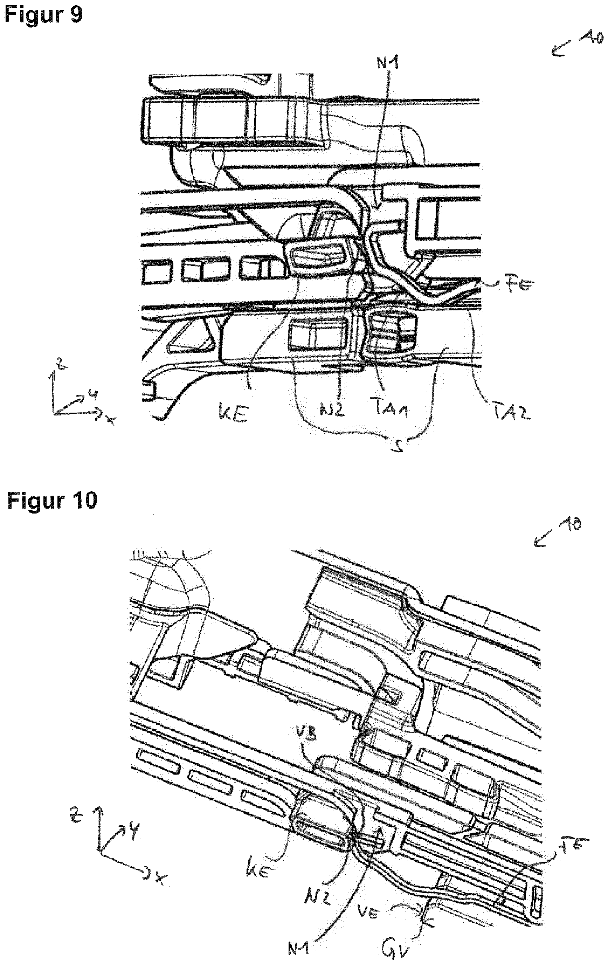

Wird der Schlitten S in dem dritten Bewegungsabschnitt weiter nach hinten verschoben, so wird das Federelement FE wieder in den ersten Zustand überführt. Dabei kommt ein vorderes Ende VE des Schlittens S, welches Teil eines vorderen Gleiters GV des Schlittens S ist, in Kontakt mit dem zweiten Teilabschnitt TA2 des Kontaktbereichs KB. Hierbei bewirkt die Federkraft des Federelements FE, dass das Federelement FE über das hintere Ende HE des Schlittens S sanft abgleitet und abgesenkt wird. Dabei greift der Verriegelungsbereich VB des Federelements FE in eine zweite Nut N2 ein, welche in dem Koppelelement KE ausgebildet ist. Dies ist in den Figuren 9 und 10 vergrößert dargestellt.

Befindet sich das Koppelelement KE vollständig in der Tasche T, so ist die zweite Nut N2 im Wesentlichen fluchtend zu der ersten Nut N1 angeordnet. Durch das Eingreifen des Verriegelungsbereichs VB in die zweite Nut N2, ist ein Herausführen des Koppelelements KE aus der Tasche T blockiert.

Wird der Schlitten S anschließend weiter nach hinten bewegt, so verbleibt der Verriegelungsbereich VB des Federelements FE in der zweiten Nut N2 des Koppelelements KE. Dabei schlägt das Federelement FE gegen das Anschlagelement ASE und/oder das Koppelelement KE an.

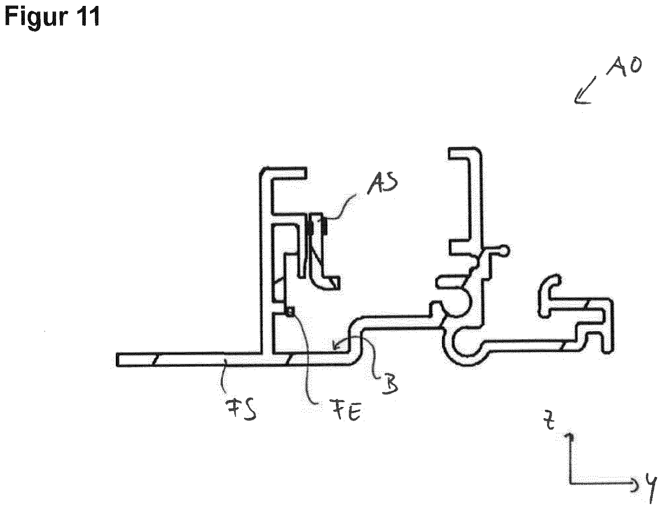

In Figur 11 ist die Führungsschiene FS in einem Querschnitt in der Y-Z-Ebene dargestellt. Dabei ist zu erkennen, dass das Federelement FE bezogen auf die Y-Richtung zwischen der Führungsschiene FS, insbesondere einer Außenwand, und der Ausstellstange AS angeordnet ist. Aufgrund der engen Platzverhältnisse ist somit ein Missbrauch des Federelements zum Lösen der Verriegelung nahezu ausgeschlossen, da man das Federelement FE praktisch nicht mittels eines spitzen Gegenstands oder dergleichen erreicht.

Der soeben beschriebene Bewegungsablauf kehrt sich entsprechend um, wenn der Schlitten S in Fahrzeuglängsrichtung nach vorne, also in -X-Richtung, in die Schließstellung des Deckels D verschoben wird.

Es sei darauf hingewiesen, dass die beschrieben unterschiedlichen Gleiter GV, GM und GH des Schlittens S auch zusammen als ein Teil, etwa als ein Gleiter, ausgebildet sein können.

Im beschriebenen Ausführungsbeispiel ist die Verriegelung der Ausstellstange AS mittels des Federelements FE beschrieben. Dabei ist die Ausstellstange AS als Betätigungselement zu verstehen, welches den Deckel D zum Ausstellen betätigt. Die vorstehend beschriebene Verriegelung mittels des Federelements FE ist jedoch nicht auf die Ausstellstange AS beschränkt. Vielmehr kann das Betätigungselement auch ein anderes Element, beispielsweise ein Lenker, ein Hebel oder dergleichen sein, welches nicht zum Ausstellen des Deckels D vorgesehen ist. Ein solches Betätigungselement kann ebenfalls mittels des Federelements FE wie beschrieben verriegelt werden.

## Patentansprüche

1. Anordnung (AO) mit einem Deckel (D) für ein Fahrzeugdach (FD), die Anordnung (AO) aufweisend
- einen in Fahrzeuglängsrichtung mittels eines Antriebs in einer Führungsschiene (FS) verschiebbaren Schlitten (S) ;
- ein Betätigungselement mit einem mechanischen Koppelelement (KE);
- ein bezüglich der Führungsschiene (FS) ortsfestes Bauelement (BE), in welchem eine Tasche (T) ausgebildet ist, die in ihrer Formgebung an das mechanische Koppelelement (KE) angepasst ist; und
- ein bezüglich der Führungsschiene (FS) ortsfest gelagertes elastisches Element;
wobei
- in einem ersten Zustand das elastische Element mit einem Verriegelungsbereich (VB) in die Tasche (T) hineinragt;
- in einem zweiten Zustand der Verriegelungsbereich (VB) aus der Tasche (T) herausgeführt ist;
so dass ausgehend von einer Schließstellung des Deckels (D) bei einem Verschieben des Schlittens (S) in Fahrzeuglängsrichtung
- in einem ersten Bewegungsabschnitt des Schlittens (S) das elastische Element mittels des Schlittens (S) von dem ersten Zustand in den zweiten Zustand überführbar ist;
- in einem anschließenden zweiten Bewegungsabschnitt des Schlittens (S) ein Einführen des mechanisches Koppelelements (KE) in die Tasche (T) steuerbar ist, so dass ein Verschieben des Betätigungselements zumindest in Fahrzeuglängsrichtung verriegelt ist; und
- in einem anschließenden dritten Bewegungsabschnitt des Schlittens (S) das elastische Element von dem zweiten Zustand in den ersten Zustand überführbar ist und dann ein Bewegen des Koppelelements (KE) aus der Tasche (T) verriegelt.

2. Anordnung (AO) nach Anspruch 1, wobei das elastische Element in dem ersten Zustand durch eine erste Nut (N1), die in dem Bauelement (BE) ausgebildet ist, in die Tasche (T) hineinragt.

3. Anordnung (AO) nach Anspruch 2, wobei das elastische Element in der ersten Nut (N1) geführt ist.

4. Anordnung (AO) nach einem der vorhergehenden Ansprüche, wobei in dem Koppelement (KE) eine zweite Nut (N2) ausgebildet ist, in welche, wenn sich das Koppelelement (KE) in der Tasche (T) befindet, das elastische Element in dem ersten Zustand zumindest teilweise zum Verriegeln des Koppelelements (KE) eingreift.

5. Anordnung (AO) nach Anspruch 4, wobei die zweite Nut des Koppelelements (KE) zumindest teilweise trichterförmig ausgebildet ist.

6. Anordnung (AO) nach einem der vorhergehenden Ansprüche, wobei ein Ende (E) des elastischen Elements ortsfest gelagert ist und der Verriegelungsbereich (VB) des elastischen Elements mittels des Schlittens (S) bewegbar ist.

7. Anordnung (AO) nach einem der vorhergehenden Ansprüche, wobei das elastische Element in dem ersten Zustand vorgespannt ist und gegen ein Anschlagelement (ASE) anschlägt.

8. Anordnung (AO) nach einem der vorhergehenden Ansprüche, wobei das elastische Element einen Kontaktbereich (KB) aufweist, der beim Verschieben des Schlittens (S) zum Überführen des elastischen Elements von dem ersten Zustand in den zweiten Zustand und/oder zum Überführen von dem zweiten in den ersten Zustand in Kontakt mit dem Schlitten (S) ist.

9. Anordnung (AO) nach Anspruch 8, wobei der Kontaktbereich (KB) einen ersten Teilabschnitt (TA1) aufweist, in welchem sich ein Abstand einer einem Boden (B) der Führungsschiene (FS) zugewandten Außenseite des elastischen Elements zu dem Boden (B) in Fahrzeuglängsrichtung nach hinten verringert.

10. Anordnung (AO) nach einem der Ansprüche 8 oder 9, wobei der Kontaktbereich einen zweiten Teilabschnitt (TA2) aufweist, in welchem sich ein Abstand einer einem Boden (B) der Führungsschiene (FS) zugewandten Außenseite des elastischen Elements zu dem Boden (B) in Fahrzeuglängsrichtung nach hinten vergrößert.

11. Anordnung (AO) nach einem der vorhergehenden Ansprüche, wobei das elastische Element mittels des Schlittens (S) in einer Ebene bewegbar ist, welche von der Fahrzeuglängsrichtung und einer dazu senkrechten Vertikalrichtung aufgespannt wird.

12. Anordnung (AO) nach einem der vorhergehenden Ansprüche, wobei das elastische Element zwischen dem Bauelement (BE) und dem Betätigungselement angeordnet ist.

13. Anordnung (AO) nach einem der vorhergehenden Ansprüche, wobei das Betätigungselement mittels des Schlittens (S) in Fahrzeuglängsrichtung verschiebbar ist, wobei das Betätigungselement in der Schließstellung des Deckels (D) mit dem Schlitten (S) gekoppelt ist und nach dem Einführen des Koppelelements (KE) in die Tasche (T) bei einem weiteren Verschieben des Schlittens (S) von dem Schlitten (S) abkoppelt.

14. Anordnung (AO) nach einem der vorhergehenden Ansprüche, wobei das Betätigungselement bei Verschieben des Schlittens (S) ausgehend von der Schließstellung des Deckels (D) in einer Auskoppelebene (AE) von dem Schlitten (S) entkoppelbar ist und im zweiten Bewegungsabschnitt relativ zu der Führungsschiene (FS) durch Einführen des Koppelements (KE) in die Tasche (T) verriegelbar ist, wobei zum Verriegeln das Einführen des Koppelelements (KE) im Wesentlichen in Normalenrichtung der Auskoppelebene (AE) erfolgt.

15. Anordnung (AO) nach Anspruch 14, wobei die Auskoppelebene (AE) von der Fahrzeuglängsrichtung und einer dazu senkrechten Vertikalrichtung aufgespannt wird.

## Claims

1. Arrangement (AO) comprising a cover (D) for a vehicle roof (FD), said arrangement (AO) having
- a sliding member (S) which is displaceable in the longitudinal direction of the vehicle by means of a drive in a guide rail (FS);
- an activation element having a mechanical coupling element (KE);
- a construction element (BE) that is locationally fixed in relation to the guide rail (FS), a pocket (T) which in the shaping thereof is adapted to the mechanical coupling element (KE) being formed in said construction element; and
- an elastic element that is mounted so as to be locationally fixed in relation to the guide rail (FS) ;
wherein
- in a first state the elastic element by way of a locking region (VB) protrudes into the pocket (T);
- in a second state the locking region (VB) is guided out of the pocket (T);
such that, starting from a closed position of the cover (D), when the sliding member (S) is being displaced in the longitudinal direction of the vehicle,
- in a first movement section of the sliding member (S) the elastic element by means of the sliding member (S) is transferable from the first state to the second state;
- in an adjacent second movement section of the sliding member (S) an introduction of the mechanical coupling element (KE) into the pocket (T) is controllable such that a displacement of the activation element is blocked at least in the longitudinal direction of the vehicle; and
- in an adjacent third movement section of the sliding member (S) the elastic element is transferable from the second state to the first state, and a movement of the coupling element (KE) out of the pocket (T) is blocked.

2. Arrangement (AO) according to Claim 1, wherein the elastic element in the first state protrudes into the pocket (T) by way of a first groove (N1) which is formed in the construction element (BE).

3. Arrangement (AO) according to Claim 2, wherein the elastic element is guided in the first groove (N1).

4. Arrangement (AO) according to one of the preceding claims, wherein a second groove (N2) is formed in the coupling element (KE), the elastic element in the first state at least partially engaging in said second groove (N2) so as to block the coupling element (KE) when the coupling element (KE) is located in the pocket (T).

5. Arrangement (AO) according to Claim 4, wherein the second groove (N2) of the coupling element (KE) is at least partially configured so as to be funnel-shaped.

6. Arrangement (AO) according to one of the preceding claims, wherein one end (E) of the elastic element is mounted so as to be locationally fixed, and the locking region (VB) of the elastic element is movable by means of the sliding member (S).

7. Arrangement (AO) according to one of the preceding claims, wherein the elastic element in the first state is pretensioned and impacts on an abutment element (ASE).

8. Arrangement (AO) according to one of the preceding claims, wherein the elastic element has a contact region (KB) which when the sliding member (S) is being displaced contacts the sliding member (S) in order for the elastic element to be transferred from the first state to the second state and/or to be transferred from the second state to the first state.

9. Arrangement (AO) according to Claim 8, wherein the contact region (KB) has a first part-portion (TA1) in which a spacing of an external side of the elastic element that faces a base (B) of the guide rail (FS) from the base (B) decreases toward the rear in the longitudinal direction of the vehicle.

10. Arrangement (AO) according to either of Claims 8 and 9, wherein the contact region has a second part-portion (TA2) in which a spacing of an external side of the elastic element that faces a base (B) of the guide rail (FS) from the base (B) increases toward the rear in the longitudinal direction of the vehicle.

11. Arrangement (AO) according to one of the preceding claims, wherein the elastic element by means of the sliding member (S) is movable in a plane which is defined by the longitudinal direction of the vehicle and a vertical direction that is perpendicular thereto.

12. Arrangement (AO) according to one of the preceding claims, wherein the elastic element is disposed between the construction element (BE) and the activation element.

13. Arrangement (AO) according to one of the preceding claims, wherein the activation element is displaceable in the longitudinal direction of the vehicle by means of the sliding member (S), wherein the activation element in the closed position of the cover (D) is coupled to the sliding member (S) and upon the introduction of the coupling element (KE) into the pocket (T) is decoupled from the sliding member (S) when the sliding member (S) is displaced farther.

14. Arrangement (AO) according to one of the preceding claims, wherein the activation element, starting from the closed position of the cover (D), when the sliding member (S) is being displaced, in a decoupling plane (AE) is capable of being decoupled from the sliding member (S), and in the second movement portion relative to the guide rail (FS) is capable of being blocked by introducing the coupling element (KE) into the pocket (T), wherein the introduction of the coupling element (KE) for blocking is performed substantially in the normal direction of the decoupling plane (AE).

15. Arrangement (AO) according to Claim 14, wherein the decoupling plane (AE) is defined by the longitudinal direction of the vehicle and a vertical direction that is perpendicular thereto.

## Revendications

1. Système (AO) muni d'une couverture (D), destiné à un toit de véhicule (FD), le système (AO) présentant
- un chariot (S) déplaçable dans un rail de guidage (FS) au moyen d'un entraînement dans la direction longitudinale du véhicule;
- un élément d'actionnement avec un élément de couplage mécanique (KE);
- un élément de construction (BE) fixe par rapport au rail de guidage (FS), dans lequel est formée une poche (T) dont la forme est adaptée à l'élément de couplage mécanique (KE); et
- un élément élastique monté de façon fixe par rapport au rail de guidage (FS);
dans lequel
- dans un premier état, l'élément élastique pénètre avec une zone de verrouillage (VB) dans la poche (T);
- dans un deuxième état, la zone de verrouillage (VB) est retirée hors de la poche (T);
de telle manière qu'en partant d'une position de fermeture de la couverture (D) lors d'un déplacement du chariot (S) dans la direction longitudinale du véhicule
- dans une première partie du mouvement du chariot (S), l'élément élastique puisse être transféré au moyen du chariot (S) du premier état au deuxième état;
- dans une deuxième partie consécutive du mouvement du chariot (S), on puisse commander une introduction de l'élément de couplage mécanique (KE) dans la poche (T), de telle manière qu'un déplacement de l'élément d'actionnement soit verrouillé au moins dans la direction longitudinale du véhicule; et
- dans une troisième partie consécutive du mouvement du chariot (S), l'élément élastique puisse être transféré du deuxième état au premier état et verrouille ainsi un mouvement de l'élément de couplage (KE) hors de la poche (T) .

2. Système (AO) selon la revendication 1, dans lequel l'élément élastique dans le premier état pénètre dans la poche (T) par une première rainure (N1), qui est formée dans l'élément de construction (BE).

3. Système (AO) selon la revendication 2, dans lequel l'élément élastique est guidé dans la première rainure (N1) .

4. Système (AO) selon l'une quelconque des revendications précédentes, dans lequel une deuxième rainure (N2) est formée dans l'élément de couplage (KE), dans laquelle, lorsque l'élément de couplage (KE) se trouve dans la poche (T), l'élément élastique dans le premier état s'engage au moins en partie pour le verrouillage de l'élément de couplage (KE).

5. Système (AO) selon la revendication 4, dans lequel la deuxième rainure de l'élément de couplage (KE) est réalisée au moins en partie en forme d'entonnoir.

6. Système (AO) selon l'une quelconque des revendications précédentes, dans lequel une extrémité (E) de l'élément élastique est montée de façon fixe et la zone de verrouillage (VB) de l'élément élastique est déplaçable au moyen du chariot (S).

7. Système (AO) selon l'une quelconque des revendications précédentes, dans lequel l'élément élastique dans le premier état est précontraint et bute contre un élément de butée (ASE).

8. Système (AO) selon l'une quelconque des revendications précédentes, dans lequel l'élément élastique présente une zone de contact (KB), qui est en contact avec le chariot (S) lors du déplacement du chariot (S) pour le transfert de l'élément élastique du premier état au deuxième état et/ou pour le transfert du deuxième état au premier état.

9. Système (AO) selon la revendication 8, dans lequel la zone de contact (KB) présente une première région partielle (TA1), dans laquelle une distance entre un côté extérieur de l'élément élastique tourné vers un fond (B) du rail de guidage (FS) et le fond (B) diminue vers l'arrière dans la direction longitudinale du véhicule.

10. Système (AO) selon une des revendications 8 ou 9, dans lequel la zone de contact présente une deuxième région partielle (TA2), dans laquelle une distance entre un côté extérieur de l'élément élastique tourné vers un fond (B) du rail de guidage (FS) et le fond (B) augmente vers l'arrière dans la direction longitudinale du véhicule.

11. Système (AO) selon l'une quelconque des revendications précédentes, dans lequel l'élément élastique est déplaçable au moyen du chariot (S) dans un plan, qui est défini par la direction longitudinale du véhicule et une direction verticale perpendiculaire à celle-ci.

12. Système (AO) selon l'une quelconque des revendications précédentes, dans lequel l'élément élastique est disposé entre l'élément de construction (BE) et l'élément d'actionnement.

13. Système (AO) selon l'une quelconque des revendications précédentes, dans lequel l'élément d'actionnement est déplaçable dans la direction longitudinale du véhicule au moyen du chariot (S), dans lequel l'élément d'actionnement est couplé au chariot (S) dans la position de fermeture de la couverture (D) et après l'introduction de l'élément de couplage (KE) dans la poche (T) est découplé du chariot (S) lors d'un nouveau déplacement du chariot (S).

14. Système (AO) selon l'une quelconque des revendications précédentes, dans lequel l'élément d'actionnement peut être découplé du chariot (S) dans un plan de découplage (AE) lors du déplacement du chariot (S) à partir de la position de fermeture de la couverture (D) et dans la deuxième partie du mouvement peut être verrouillé par rapport au rail de guidage (FS) par introduction de l'élément de couplage (KE) dans la poche (T), dans lequel pour le verrouillage l'introduction de l'élément de couplage (KE) est opérée essentiellement dans la direction normale au plan de découplage (AE).

15. Système (AO) selon la revendication 14, dans lequel le plan de découplage (AE) est défini par la direction longitudinale du véhicule et une direction verticale perpendiculaire à celle-ci.
